(19) Europäisches Patentamt

European Patent Office

Office européen des brevets

(11) **EP 0 806 281 B1**

(12) **EUROPÄISCHE PATENTSCHRIFT**

(45) Veröffentlichungstag und Bekanntmachung des Hinweises auf die Patenterteilung:
**12.04.2000 Patentblatt 2000/15**

(51) Int Cl.$^7$: **B29C 47/68**, B01D 29/41

(21) Anmeldenummer: **97107267.3**

(22) Anmeldetag: **02.05.1997**

(54) **Filtervorrichtung zum gleichmässigen Filtrieren von Kunststoffschmelzen**

Filter apparatus for the uniform filtration of plastic melts

Dispositif filtrant permettant la filtration homogène des matières plastiques fondues

(84) Benannte Vertragsstaaten:
**DE FR GB IT LU NL**

(30) Priorität: **06.05.1996 DE 19618090**

(43) Veröffentlichungstag der Anmeldung:
**12.11.1997 Patentblatt 1997/46**

(73) Patentinhaber: **Mitsubishi Polyester Film GmbH**
**65203 Wiesbaden (DE)**

(72) Erfinder:
• **Müller, Harald**
**65232 Taunusstein (DE)**
• **Zimmermann, Heinz Werner**
**65611 Brechen (DE)**

• **Zimmermann, Uwe**
**56357 Hainau (DE)**

(74) Vertreter: **Zounek, Nikolai, Dipl.-Ing. et al**
**Patentanwaltskanzlei Zounek,**
**Industriepark Kalle Albert,**
**Gebäude H287**
**65174 Wiesbaden (DE)**

(56) Entgegenhaltungen:
**EP-A- 0 658 638        DE-A- 3 430 992**
**DE-A- 4 212 928        DE-C- 915 490**
**DE-C- 3 644 489        DE-C- 3 941 831**
**US-A- 4 572 784**

EP 0 806 281 B1

**Beschreibung**

Die Erfindung betrifft eine Filtervorrichtung zum gleichmäßigen Filtrieren von Kunststoffschmelzen, mit einem Filtergehäuse, in dessen Innenraum entlang einer zentral angeordneten Filterstange zueinander parallele Filterscheiben angeordnet sind, durch welche Teilströme der zu filtrierenden Kunststoffschmelze hindurchströmen.

Bekannte Filtervorrichtungen besitzen im allgemeinen unterschiedliche Geometrien, wie beispielsweise eine Filtertopf-Geometrie, bei der eine einzige Filterfläche in Zylinderform die Innenwand des Filtertopfes bildet, oder bestehen aus einer Filterkerzen-Anordnung, bei der eine Anzahl von Filterkerzen in einem Filtergehäuse untergebracht ist, oder aus einem mit Filterscheiben bestückten zylindrischen Filtergehäuse.

Aus der US-A-4 572 784 ist eine Filtervorrichtung bekannt, die ein Hohlrohr umfaßt, das aus einem geraden zylindrischen und einem zusammenlaufenden Abschnitt besteht, wobei den letzteren Abschnitt eine gekrümmte Endfläche abschließt. Das Hohlrohr ist von einem Stapel aus Filterscheiben umschlossen und weist Rippen auf, die über seinen Umfang verteilt sind und mit den Filterscheiben des Stapels im Eingriff stehen, wobei zwischen den Innenrändern der Filterscheiben und dem Hohlrohr ein vorgegebener Abstand bzw. eine lichte Weite eingehalten ist. Im Hohlrohr befinden sich Öffnungen, durch die Schmelze ausströmt, die über einen Einlaß in das Hohlrohr einströmt. Diese Schmelze fließt zu den Filterscheiben und nach dem Durchströmen der Filterscheiben gelangt die filtrierte Schmelze in ein Hohlteil, das mit dem Hohlrohr über die Rippen verbunden ist und den Auslaß der Filtervorrichtung bildet.

Aus der EP-B 0 247 468 ist eine Filtervorrichtung für Kunststoffschmelzen bekannt, bei der im Filtergehäuse entlang konzentrischer Kreise Kerzenfilter angeordnet sind, die aus einem Stützkörper und einem Filtermaterial bestehen und durch welche die zu filtrierende Kunststoffschmelze hindurchfließt. Jedes Kerzenfilter im Stützkörper enthält einen Verdrängerkörper, der einen Spalt gleichbleibender Weite mit der Innenwand des Stützkörpers bildet. Die Packungsdichte der Kerzenfilter pro Volumeneinheit nimmt vom Umfang ins Zentrum des Filtergehäuses ab. Zur Verringerung des Durchströmvolumens sind Strömungskörper zwischen den Kerzenfiltern angeordnet.

In der DE-A - 34 19 822 ist eine Filtervorrichtung eines Schneckenextruders zum Filtrieren der aus dem Schneckenextruder austretenden Kunststoffschmelze beschrieben, die ein Filtergehäuse mit einer Ein- und Austrittsbohrung aufweist, mit einem darin quer zum Schmelzestrom verschiebbaren Wechselschieber. Mindestens eine Aussparung, die aus einer ringförmigen Eindrehung besteht, im Wechselschieber, dient zur Aufnahme eines Siebkörpers. Zur gleichmäßigen Verteilung des Schmelzestroms in der Filtervorrichtung und der auf die Filteroberfläche einwirkenden Druckkräfte ist die Aussparung ringförmig geformt, und ist ein mit der Eintrittsbohrung verbund,er Schmelzekanal vorhanden, in welchem der zylinderförmige Siebkörper die Eindrehung der Aussparung formschlüssig umhüllt. Eine in der Längsachse des Wechselschiebers verlaufende Durchflußbohrung verbindet die Eintritts bohrung mit der Austrittsbohrung im Filtergehäuse. In die Durchflußbohrung ist ein Verdrängerkegel eingebaut, wodurch ein ringförmiger Sammelkanal entsteht, der sich in Strömungsrichtung der Schmelze auf die Austrittsbohrung hin erweitert.

Bei dieser Filtervorrichtung handelt es sich um einen Filtertopf, der im allgemeinen eine einzige Filterfläche in Zylinderform aufweist, die in der Gehäusewand der Filtervorrichtung angeordnet ist. Bei der bekannten Filtervorrichtung wird eine gleichmäßige Verteilung des Schmelzestroms im Filter und der einwirkenden Druckkräfte auf die Filteroberfläche, sowie eine volle Entlastung der auf die Führungsfläche des Wechselschiebers einwirkende Querkräfte angestrebt. Durch den Verdrängerkegel im Schmelzekanal soll im Wechselschieber bei strömungsgünstigen Querschnittsverhältnissen der Fließwiderstand der Schmelze auf ein Minimum reduziert werden.

Aus verfahrenstechnischer Sicht ist es wünschenswert, bei der installierten Filterfläche eine Filtervorrichtung mit möglichst kleinem Volumen zu haben, das keine oder nur sehr kleine Totzonen aufweist. Die Filterfläche bildet bei einem Filtertopf im allgemeinen den größten Teil des Topfumfangs bzw. der Gehäusewand, wobei die äußere Form des Filtertopfes ähnlich derjenigen eines zylindrischen Kerzenfilters ist. Gibt es keine oder nur sehr kleine Totzonen in der Filtervorrichtung, so ist die Verweilzeitverteilung der einzelnen Teilchen eng und der Abbau der Schmelze minimal. Die Verweilzeitverteilung beschreibt, welcher Anteil der Masseteilchen der Kunststoffschmelze nach welcher Zeit die Filtervorrichtung verlassen hat.

Voraussetzung für das Einhalten möglichst kleiner Totzeiten ist eine vollständige Durchflutung des Filtervolumens durch die Schmelze. Dies wird am ehesten dadurch erreicht, daß sich der Geschwindigkeitsvektor innerhalb des Filtertopfes sowohl betrags- als auch richtungsmäßig nicht oder nur sehr wenig ändert. Eine konstruktive Ausführung einer Filtervorrichtung, bei der beispielsweise die Schmelzeströmung um 90 bis 180° umgelenkt wird, sollte daher nach Möglichkeit vermieden werden.

Kompakte Filtervorrichtungen, die die oben genannten Anforderungen erfüllen, lassen sich nach dem Stand der Technik, wie er sich beispielsweise in den Literaturstellen "Filtrieren von Kunststoffschmelzen" VDI-Verlag GmbH 1981, "Kunststoff 70", Jahrgang 1980, Band II, Seiten 753-758 und "-Plastverarbeiter", 33. Jahrgang 1982, Nr. 12, Seiten 1447-1454 beschrieben ist, am besten durch die konzentrische Anordnung von Filtereinsätzen in Kerzen- oder Diskusscheibenform in Filtergehäusen realisieren.

Bei Filtervorrichtungen mit Filterscheiben, insbesondere, wenn sie senkrecht in der Filterstrecke angeordnet sind, sind beispielsweise die Aufteilung der Teilströme und deren Durchsätze über die einzelnen Filterscheiben sehr inhomogen. Dies führt zu erhöhtem Gesamtdruckverlust und zu einer Aufweitung des Verweilzeitspektrums durch die zu hohen Verweilzeiten der Masseteilchen in der Filtervorrichtung. Längere Verweilzeiten und eine Aufweitung des Verweilzeitspektrums bewirken einen signifikanten Schmelzeabbau, worunter zu verstehen ist, daß das mittlere Molekulargewicht der Schmelze infolge des längeren Einwirkens höherer Temperatur auf die Schmelze geringer wird.

Aufgabe der Erfindung ist es, eine Filtervorrichtung der eingangs beschriebenen Art so zu verbessern, daß die Durchsatzverteilung der Schmelze über die einzelnen Filterscheiben nahezu konstant ist, die Verweilzeit vergleichmäßigt und verkürzt wird, das Verweilzeitspektrum konstant und eng gehalten wird, der Gesamtdruckverlust über die Länge der Filtervorrichtung reduziert und der Schmelzeabbau sehr klein gehalten wird.

Die Aufgabe wird erfindungsgemäß durch die Filtervorrichtung nach dem Oberbegriff des Anspruchs 1 in der Weise gelöst, daß sich die Filterstange aus Vollmaterial in einem zylindrischen Kanal befindet, daß die Teilströme, welche durch die Filterscheibe hindurchströmen, in den Kanal einströmen, daß eine Filtergehäuseinnenwand sich über ihre volle Länge in Fließrichtung der Kunststoffschmelze verjüngt und daß der Durchmesser d der Filterstange über deren volle Länge in Fließrichtung der Kunststoffschmelze abnimmt.

In Ausgestaltung der Erfindung verjüngt sich ein Innendurchmesser D des Innenraums des Filtergehäuses in Fließrichtung der Kunststoffschmelze entsprechend einer Funktion größer einer zweiten Wurzel-Funktion.

Dabei besitzen zweckmäßigerweise die Filterscheiben gleichgroße Außen- und Innendurchmesser $d_{ad}$ bzw. $d_{id}$.

In Weiterbildung der Erfindung folgt eine Spaltweite $h_a(x)$ entsprechend dem Abstand Filterscheibenaußenrand zu Filtergehäuseinnenwand, in Abhängigkeit von der Lagekoordinate x in Fließrichtung der Kunststoffschmelze, aus der Beziehung

$$h_a(x) = h_{a\,min} + (h_{a\,max} - h_{a\,min})\left(1 - \frac{x}{N}\right)^{\beta},$$

mit der minimalen Spaltweite $h_{a\,min}$, der maximalen Spaltweite $h_{a\,max}$, der Gesamtlänge N des Filterbereichs, der sämtliche Filterscheiben umfaßt, und einem geometrischen Exponenten $\beta$, der größer 1/4 und kleiner 1/2 ist. In bevorzugter Weise ist der geometrische Exponent $\beta = 1/3$.

Die weitere Ausgestaltung der Erfindung ergibt sich aus den Merkmalen der Patentansprüche 6 bis 16.

Mit der Filtervorrichtung nach der Erfindung können unter anderem niederviskose Kunststoffschmelzen, beispielsweise aus Polyethylenterephthalat (Polyester), mit Durchsätzen bis zu 5000 kg pro Stunde, insbesondere von 50 bis 600 kg pro Stunde mit geringem Druckverlust, kurzen Verweilzeiten, bei sehr engem Verweilzeitspektrum filtriert werden. Als weitere Vorteile ergeben sich eine gleichmäßige Filterscheibenbelegung und somit hohe Standzeiten der Filterscheiben.

Die Erfindung wird im folgenden anhand der Zeichnungen näher erläutert. Es zeigen:

Figur 1     eine Schnittansicht durch eine Filtervorrichtung mit Filterscheiben, die senkrecht in einer Filterstrecke angeordnet ist,

Figur 2     im Schnitt die Filtervorrichtung der Figur 1, liegend in der Filterstrecke angeordnet,

Figur 3     einen vergrößerten schematischen Ausschnitt der Filtervorrichtung nach Figur 1 zur Definition von geometrischen Größen der Filtervorrichtung,

Figur 4     den schematischen Ausschnitt nach Figur 3 mit Dimensionsangaben zu den geometrischen Größen der Figur 3,

Figur 5     Verweilzeitspektren für vorgegebene Durchsätze von Kunststoffschmelzen,

Figur 6     ein Diagramm der Druckverluste und der Standzeiten einer Filtervorrichtung, die eine vorgegebene Anzahl von Filterscheiben enthält,
und

Figur 7     Querschnitte einer Filterstange an drei Stellen.

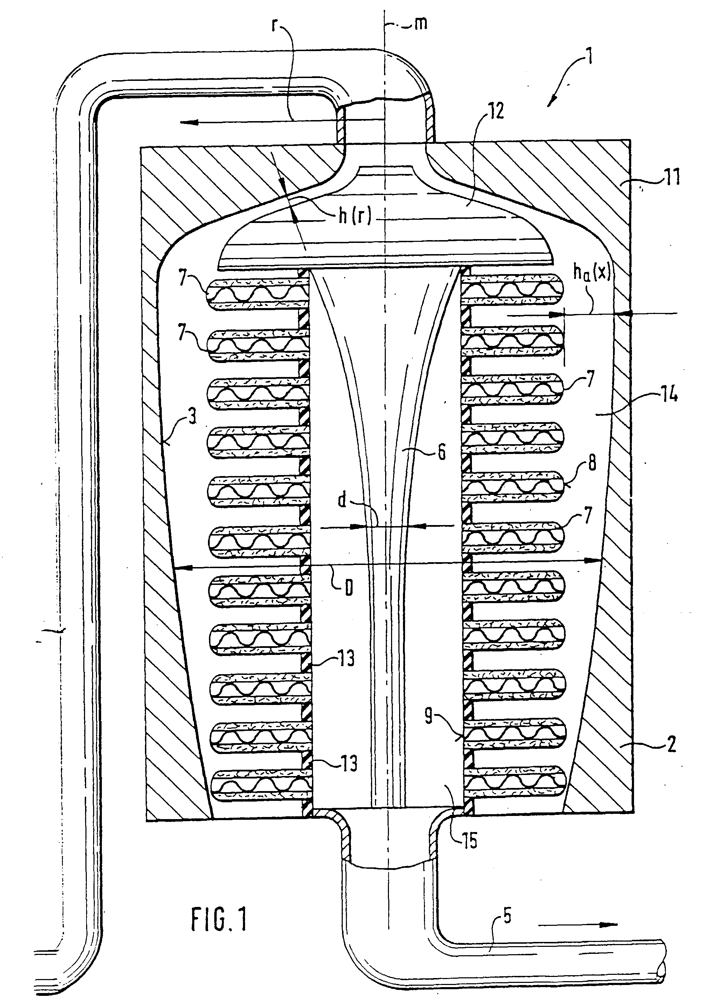

Figur 1 zeigt im Schnitt eine Filtervorrichtung 1, deren Filtergehäuse 2 in seinem Innenraum 14 zueinander parallele Filterscheiben 7 aufweist. Die Filtervorrichtung 1 ist stehend in der Filterstrecke angeordnet, und ein Zulauf 4 für die Kunststoffschmelze, die beispielsweise von einem nicht gezeigten-Schneckenextruder zufließt, verläuft außerhalb des Filtergehäuses 2 und mündet von oben in das Filtergehäuse 2 ein. Ein Abfluß 5 befindet sich am Boden des Filtergehäuses 2. Im Innenraum 14 ist zentral eine Filterstange 6 angeordnet, auf der sich die zueinander parallelen Filterscheiben 7 befinden. Die Filterscheiben 7 besitzen einen Außendurchmesser von 178 bis 305 mm, d.h. von 7 bis 12 Zoll, und haben eine Scheibendicke in der Größenordnung von 6 bis 10 mm.

Im Filtergehäusekopf 11 ist oberhalb der ersten Filterscheibe 7 eine Prallplatte 12 angeordnet, die einen Spalt mit einer Filtergehäuseinnenwand 3 bildet.

Die Filtergehäuseinnenwand 3 umschließt den Innenraum 14 der Filtervorrichtung 1, die als Durchflußfiltervorrichtung arbeitet. Die durch den Zufluß 4 in die Filtervorrichtung 1 strömende Kunststoffschmelze fließt durch den Spalt zwischen der Prallplatte 12 und der Filtergehäuseinnenwand 3 nach unten und teilt sich in Teilströme auf, die die einzelnen Filterscheiben 7 durchströmen. Ein Innendurchmesser D des Filtergehäuses 2 verringert sich in Fließrichtung der Kunststoffschmelze entsprechend der Verjüngung der Filtergehäuseinnenwand 3. Wie nachstehend noch näher beschrieben werden wird, ändert sich der Innendurchmesser D gemäß einer Funktion größer einer zweiten Wurzel-Funktion.

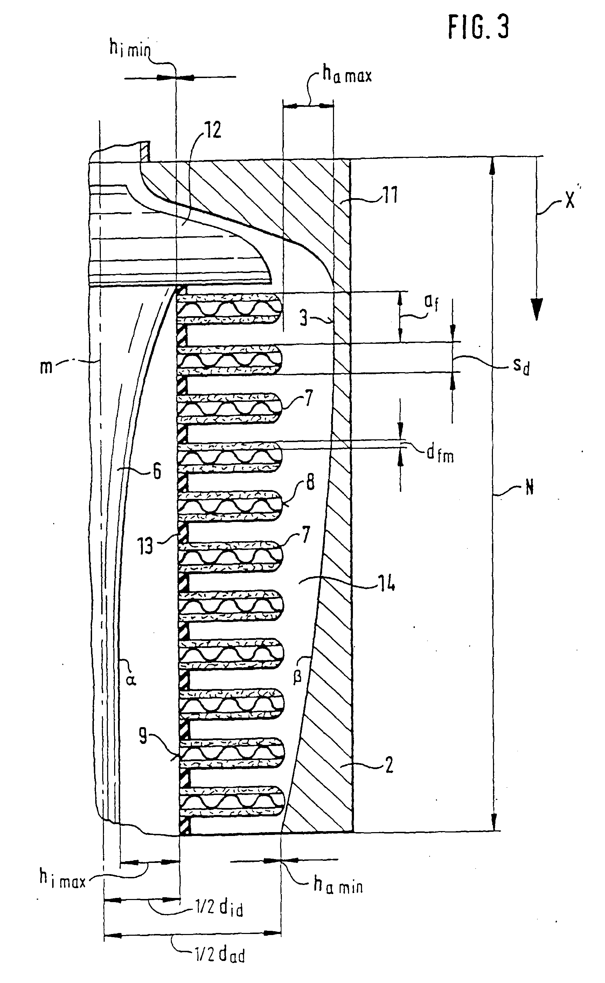

Die Filterscheiben 7 besitzen gleichgroße Scheibenaußendurchmesser und gleichgroße Scheibeninnendurchmesser. Ein Außenrand 8 der einzelnen Filterscheibe 7 hat einen Abstand $h_a(x)$ von der Filtergehäuseinnenwand 3, der sich mit der Lagekoordinate x der einzelnen Filterscheibe 7 ändert (vgl. hierzu Figur 3). Zwischen den zueinander parallelen Filterscheiben 7, die einen Innenrand 9 besitzen, befinden sich Dichtungen 13. Die durch die Filterscheiben 7 hindurchströmenden Teilströme treten in einen Kanal 15 ein, in dem sich die Filterstange 6 befindet und der von den Dichtungen 13 und den Innenrändern 9 der Filterscheibe 7 begrenzt ist. In den Filterscheiben 7 erfolgt die Filtration der Kunststoffschmelze, so daß in den Kanal 15 nur noch filtrierte Kunststoffschmelze einströmt. Ein Durchmesser d der Filterstange 6 verringert sich in Fließrichtung der Kunststoffschmelze.

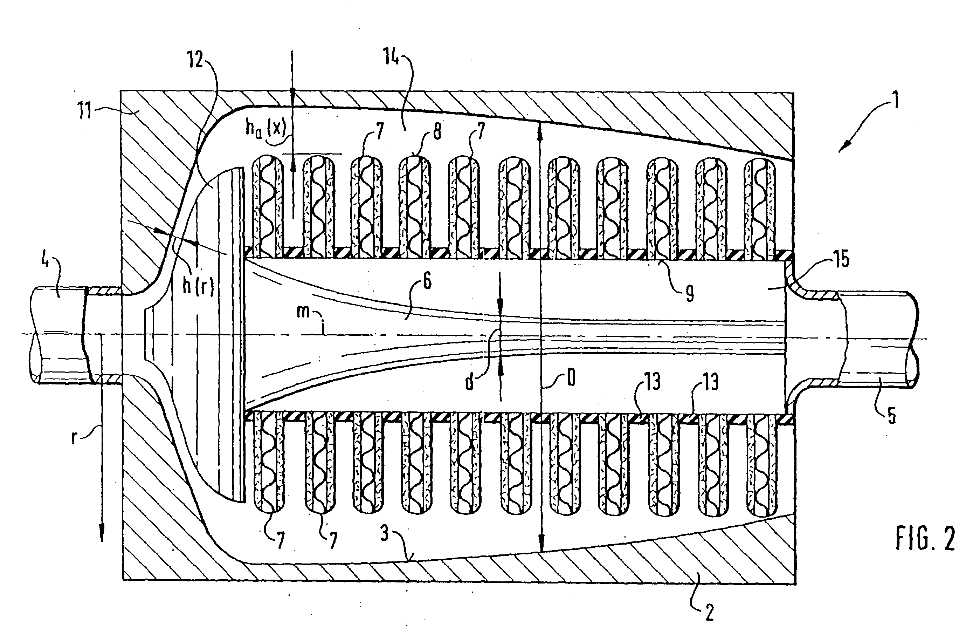

In Figur 2 ist die bevorzugte Anordnung der Filtervorrichtung 1, nämlich in der Filterstrecke liegend, dargestellt, die hinsichtlich des Strömungsprofils und der gleichmäßigen Aufteilung der Teilströme der Kunststoffschmelze auf die einzelnen Filterscheiben 7 noch bessere Ergebnisse als die Anordnung gemäß Figur 1 liefert. Die Filtervorrichtung 1 wird als Durchflußfiltervorrichtung betrieben, wobei der horizontale Zulauf 4 und der horizontale Ablauf 5 auf gleicher Höhe und mittig am Filtergehäusedeckel und -boden angebracht sind. Die Elemente der Filtervorrichtung, die identisch mit den Elementen der Filtervorrichtung 1 nach Figur 1 sind, haben die gleichen Bezugszeichen und werden nicht ein weiteres Mal beschrieben.

Anhand von Figur 3, die einen vergrößerten Teilausschnitt der Filtervorrichtung 1 nach Figur 1 bzw. 2 zeigt, wird die Geometrie der Filtervorrichtung 1 näher erläutert. Die Lagekoordinate x gibt die Position der einzelnen Filterscheibe 7 wieder und läuft in Fließrichtung der Kunststoffschmelze, d.h. in Figur 1 von oben nach unten und in Figur 2 von links nach rechts. Ein Abstand $a_f$ von der Oberseite einer Filterscheibe 7 zur Oberseite einer benachbarten Filterscheibe 7 liegt in der Größenordnung von 6 bis 13 mm, wobei dieser Abstand auch gleich der Summe aus Scheibendicke und der Dicke der Dichtung 13 ist. Die Scheibendicke $s_d$ beträgt 5 bis 10 mm, während die Dicke $d_{fm}$, des Filtermediums der einzelnen Filterscheibe sich zwischen 1 und 8 mm, insbesondere 2,5 bis 3 mm bewegt. Die Filterscheiben 7 besitzen gleichgroße Außen- und Innendurchmesser $d_{ad}$ bzw. $d_{id}$. Der Scheibenaußendurchmesser beträgt 178 bis 305 mm, während der Scheibeninnendurchmesser im Bereich von 38 bis 85 mm liegt.

Es sind jeweils nur die halben Scheibeninnen- und -außendurchmesser $1/2 d_{id}$ und $1/2 d_{ad}$ eingezeichnet, von der Mittellinie m bis zum Filterscheibeninnen- bzw. -außenrand. Die minimale Spaltweite $h_{a\,min}$ zwischen Filterscheibenrand und der Filtergehäuseinnenwand 3 befindet sich nahe dem Filtergehäuseboden, während die maximale Spaltweite $h_{a\,max}$ nahe einem Filtergehäusedeckel liegt. Umgekehrt verhalten sich die Verhältnisse bei dem Abstand zwischen der Filterstange 6 und dem Filterscheibeninnenrand. Hier befindet sich die minimale Spaltweite $h_{i\,min}$ nahe dem Filtergehäusedeckel, während die maximale Spaltweite $h_{i\,max}$ nahe dem Filtergehäuseboden liegt. Die Exponenten a und β der Wurzelfunktion geben die Krümmung der Filterstange 6 und der Filtergehäuseinnenwand 3 vor.

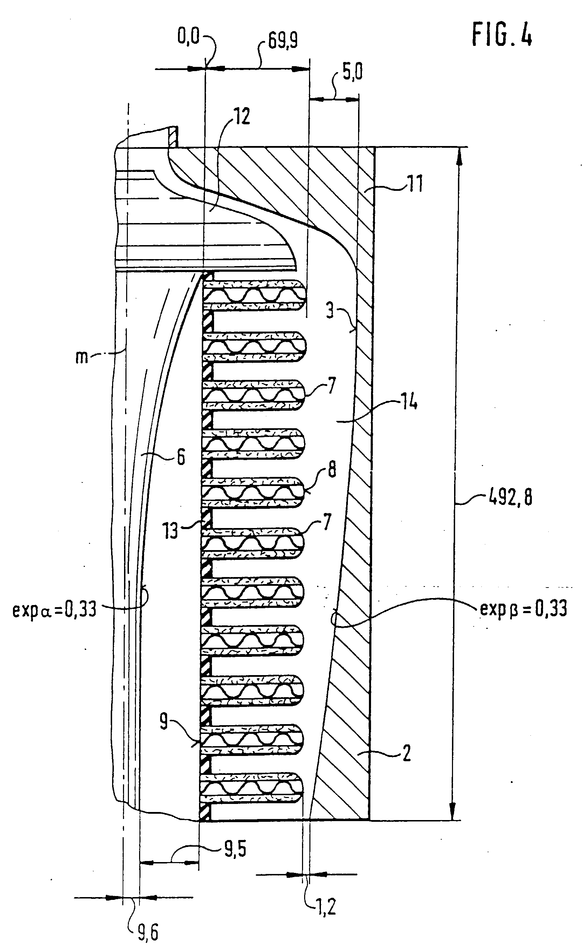

Wie Figur 4 zeigt, ist der bevorzugte Wert von α und β jeweils gleich 1/3. Bei einer Gesamtlänge N der Filtervorrichtung von 492,8 mm und einer Anzahl von 56 Filterscheiben betragen $h_{a\,max} = 5,0$ mm, $h_{a\,min} = 1,2$ mm, $h_{i\,max} = 9,5$ mm, $h_{i\,min} = 0,0$ mm, $1/2\,d_{id} = 19,1$ mm und $1/2\,d_{ad} = 89$ mm. Die Spaltweite $h_a(x)$ ist der Abstand Filterscheibeaußenrand 8 zu Filtergehäuseinnenwand 3, in Abhängigkeit von der Lagekoordinate x in Fließrichtung der Kunststoffschmelze. Die Spaltweite $h_a(x)$ berechnet sich gemäß der Beziehung

$$h_a(x) = h_{a\,min} + (h_{a\,max} - h_{a\,min}) \left(1 - \frac{x}{N}\right)^{\beta},$$

mit der minimalen Spaltweite $h_{a\,min}$, der maximalen Spaltweite $h_{a\,max}$, der Gesamtlänge N des Filterbereiches, der sämtliche Filterscheiben 7 umfaßt, und dem geometrischen Exponenten β, der größer 1/4 und kleiner 1/2 ist. Der bevorzugte Wert für den geometrischen Exponenten β beträgt 1/3, wie schon voranstehend erwähnt wurde.

Der Gehäuseinnendurchmesser D, in Abhängigkeit von der Höhe der Filtervorrichtung, errechnet sich aus

$$D(x) = d_{ad} + 2 \cdot h_a(x).$$

Mit anderen Worten bedeutet dies, daß der Innendurchmesser D des Innenraums 14 des Filtergehäuses 2 in Abhängigkeit von der Lagekoordinate x in Fließrichtung sich aus der Summe des Außendurchmessers $d_{ad}$ der Filterscheiben 7 und dem doppelten Abstand $h_a(x)$ Filterscheibenaußenrand 8 zu Filtergehäuseinnenwand 3 gemäß den Figuren 1 und 2 ergibt. Die Strömungsquerschnitte für den Zulauf der Kunststoffschmelze zwischen dem Filterscheibenrand 8 und der Filtergehäuseinnenwand 3 werden als ebene Spalte angenommen.

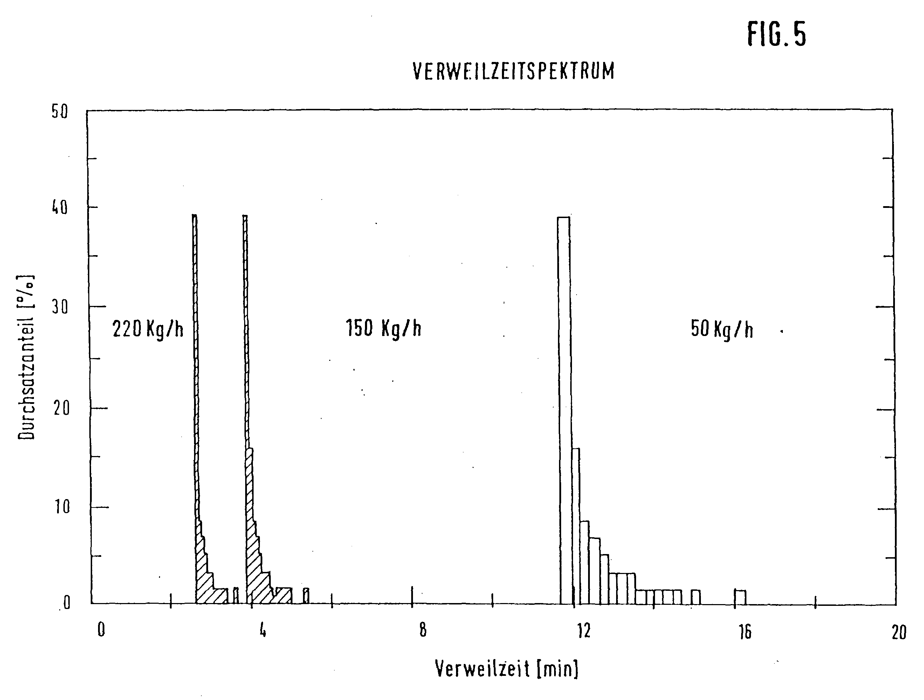

In Figur 5 sind die Verweilzeitspektren für unterschiedliche Durchflußmengen von 50 kg/Stunde, 150 kg/Stunde und 220 kg/Stunde durch eine Filtervorrichtung mit den Dimensionen, wie sie zuvor anhand der Figuren 3 und 4 beschrieben wurden, dargestellt. Als Ordinate ist jeweils der Prozentanteil der Gesamtdurchflußmenge pro Stunde aufgetragen, während auf der Abszisse die Verweilzeit in Minuten angegeben ist. Wie dem Diagramm zu entnehmen ist, nimmt die Verweilzeit mit steigender Durchflußmenge pro Stunde ab, d.h. das Verweilzeitspektrum wird enger. Das Ziel der Auslegung der erfindungs gemäßen Filtervorrichtung ist eine möglichst enge Verweilzeitverteilung, die sich vor allem durch folgende Maßnahmen erreichen läßt:

- Der Filtergehäuseinnenraum bzw. -durchmesser, der den kreisringförmigen Strömungsquerschnitt zwischen Filterscheibenrand und Filtergehäuseinnenwand festlegt, verjüngt sich gemäß einer Wurzelfunktion in Fließrichtung der Kunststoffschmelze, wobei der Exponent der Wurzelfunktion im Bereich von 0 bis 1, insbesondere von 1/4 bis 1/2, liegt und bevorzugt gleich 1/3 ist.

- Der Durchmesser d der Filterstange 6, der den kreisförmigen Strömungsquerschnitt zwischen der Filterstange und den Filterscheiben festlegt, verjüngt sich gleichfalls in Fließrichtung der Kunststoffschmelze gemäß einer Wurzelfunktion, deren Exponent im Bereich von 0 bis 1, insbesondere von 1/4 bis 1/2, liegt. Ein bevorzugter Wert des Exponenten beträgt 1/3.

Weiterhin erfüllt die Filtervorrichtung die Forderung nach geringem Druckverlust und kleiner mittlerer Verweilzeit, wie voranstehend anhand von Figur 5 gezeigt wurde. Der wesentliche Parameter für den geringen Druckverlust und die kleinere mittlere Verweilzeit ist die Filterfläche bzw. die Anzahl der Scheibenfilter. Eine große Filterfläche verringert den Druckverlust, erhöht jedoch die mittlere Verweilzeit.

Die geeignete Wahl der Spaltweite $h_a(x)$ und $h_i(x)$ erfolgt in der Weise, daß eine möglichst homogene Durchsatzverteilung über die einzelnen Filterscheiben und ein enges Verweilzeitspektrum des Schmelzeflusses erzielt werden. Die Spaltweite $h_i(x)$ in Abhängigkeit von der Längenkoordinate x in Fließrichtung der Kunststoffschmelze gibt den Abstand Stangenaußenseite zu Filterscheibeninnrand 9 wieder und ergibt sich aus der Beziehung

$$h_i(x) = h_{i\,max} \left(\frac{x}{N}\right)^a,$$

mit der maximalen Spaltweite $h_{i\,max}$, der Lagekoordinate x, der Gesamtlänge N des Filterbereiches, der sämtliche Filterscheiben 7 umfaßt, und dem geometrischen

Exponenten $\alpha$, der bevorzugt im Bereich größer 1/4 und kleiner 1/2 liegt, wie schon voranstehend erwähnt wurde. Insbesondere beträgt der geometrische Exponent $\alpha$ 1/3.

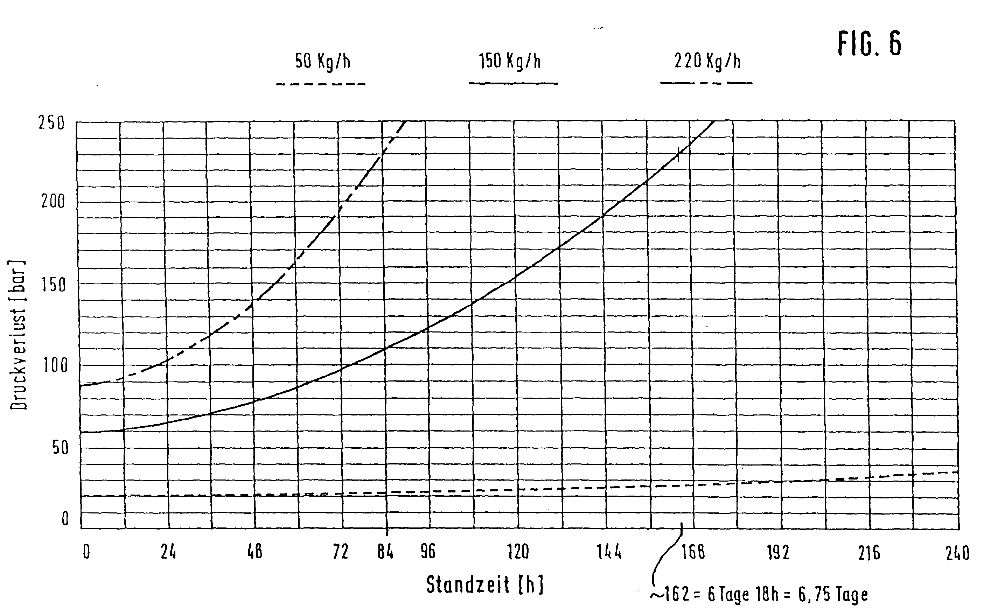

In Figur 6 sind Filterdruckverlustkurven für eine Filtervorrichtung 1 mit 56 Filterscheiben und den Abmessungen der Fig. 4 für die drei bekannten Durchflußmengen von 50 kg/Stunde, 100 kg/Stunde und 220 kg/Stunde dargestellt. Die gesamte Filterfläche dieser Filtervorrichtung beträgt etwa 2,30 m$^2$. Mit der Annahme, daß der maximal zulässige Druckverlust 230 bar beträgt, ergibt sich für die Filtervorrichtung bei dem hohen-Durchsatz von 220 kg/Stunde eine Standzeit von ca. 84 Stunden und bei einem mittleren Durchsatz von 150 kg/Stunde eine Standzeit von etwa 162 Stunden. Nach diesen Standzeiten muß die Filtervorrichtung entweder ausgetauscht oder die Filterscheiben durch Rückspülen gereinigt werden, um einen Druckanstieg über den maximal zulässigen Druckverlust zu vermeiden.

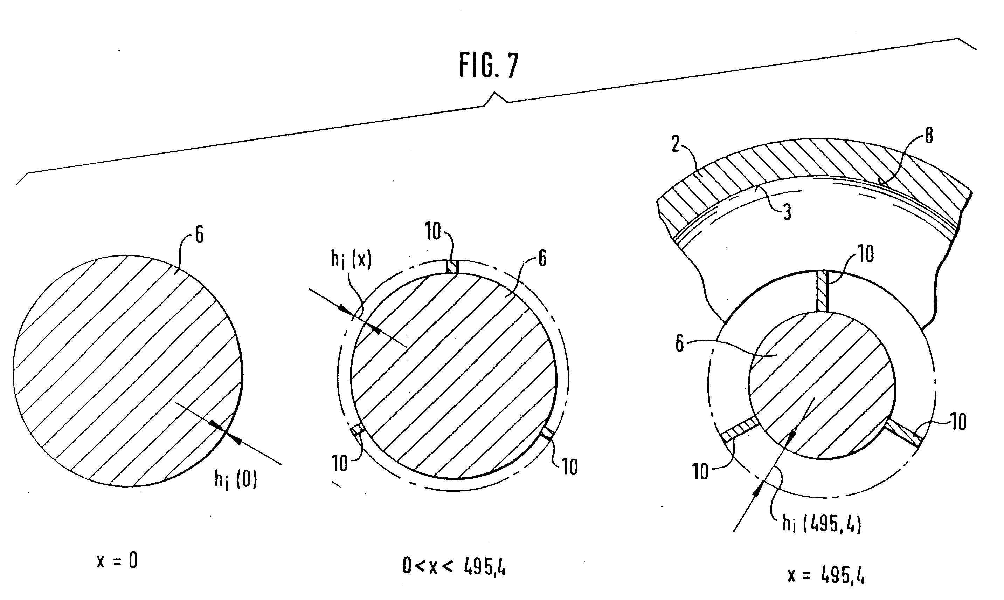

In Figur 7 sind drei Stangenquerschnitte über die Gesamtlänge N = 495,4 mm der Filtervorrichtung 1 dargestellt. Der in Figur 7 links dargestellte Stangenquerschnitt der Filterstange 6 entspricht der Lagekoordinate x = 0, d.h. dem Stangenquerschnitt ganz oben in Figur 1 bzw. links in Figur 2 der Filtervorrichtung. Die Spaltweite $h_i$ entspricht der minimalen Spaltweite $h_{i\,min}$ und ist gleich 0. Der mittlere Stangenquerschnitt ist kleiner als der linke Stangenquerschnitt und entspricht einer Lagekoordinate 0 < x < 495,4 mm. Die Spaltweite $h_i$ (x) ist größer als 0. Der rechte Stangenquerschnitt in Figur 7 gehört zu der Lagekoordinate x = 495,4 mm. Die Spaltweite $h_i(x)$ entspricht der maximalen Spaltweite $h_{i\,max}$ und beträgt 9,5 mm. Dieser Stangenquerschnitt ist der kleinste und befindet sich am Auslauf der Filtervorrichtung, d.h. in Figur 1 unten bzw. in Figur 2 am rechten Ende der Filtervorrichtung 1. Die Filterstange 6 weist radiale Stege 10 auf, deren Längen in Fließrichtung der Kunststoffschmelze ansteigen, wie aus dem mittleren und rechten Stangenquerschnitt in Figur 7 ersichtlich ist. Die Stege 10 dienen als Filterscheibenauflagen zur axialen Justierung der Filterscheiben 7. Die drei Stege 10 sind sehr schmal gehalten, um die Strömungsquerschnitte im Kanal 15 der Filtervorrichtung 1 möglichst wenig zu beeinflussen. Die einzelnen Strömungsquerschnitte im Kanal 15 werden als ebene Spalte behandelt bzw. betrachtet.

Wie aus den Figuren 1 und 2 zu ersehen, ist im Filtergehäusekopf 11 eine Prallplatte 12 oberhalb bzw. vor der ersten Filterscheibe 7 angeordnet. Der Zulauf von dem Stangeninnenteil bis zur ersten Filterscheibe ist bei der erfindungsgemäßen Filtervorrichtung 1 unter folgenden Gesichtspunkten optimiert:

- Es herrscht ein konstanter Druckgradient in Radialrichtung.

- Der Abstand Prallplatte - Gehäuse ist am Rand gleich der maximalen Spaltweite $h_a(x)$, d.h. der Spaltweite zwischen Filterscheibenaußenrand 8 und Filtergehäuseinnenwand 3 für die Lagekoordinate x = 0.

Die Spaltweite h(r) in Abhängigkeit von dem Radius r ergibt sich dann gemäß der Beziehung

$$h(r) = \sqrt[3]{1{,}1125 \times 10^{-8} \times 1/r,}$$

mit h und r in Metern. Die Spaltweite h(r) und r sind in Figur 1 eingezeichnet. Die Spaltweite h(r) zwischen Filtergehäuseinnenwand und der Prallplatte 12 ist somit umgekehrt proportional zu der dritten Wurzel des radialen Abstands r von der Mittellinie m der Filterstange 6 bzw. der Filtervorrichtung 1. Bei einem Durchsatz von 50 kg/h an Kunststoffschmelze beträgt die Verweilzeit 13 sec und der Druckverlust 0,3 bar im Spalt zwischen der Prallplatte 12 und dem Filtergehäusekopf 11. Bei einem Durchsatz von 220 kg/h an Kunststoffschmelze beträgt die Verweilzeit 5 sec und der Druckverlust 1,3 bar in der Filtervorrichtung 1, für den Fall, daß diese 56 Filterscheiben 7 mit einem Scheibenaußendurchmesser $d_{ad}$ von 178 mm enthält.

Die oben angeführten Formeln bzw. Gleichungen für die Spaltweiten $h_a(x)$, $h_i(x)$ und h(r) sind auch für Filtervorrichtungen 1 gültig, die eine Gesamtlänge N größer oder kleiner als 494,5 mm, mehr oder weniger Filterscheiben als 56 und Filterscheibenaußendurchmesser größer oder kleiner als 178 mm aufweisen.

**Patentansprüche**

1.  Filtervorrichtung zum gleichmäßigen Filtrieren von Kunststoffschmelzen, mit einem Filtergehäuse (2), in dessen Innenraum (14) entlang einer zentral angeordneten Filterstange (6) zueinander parallele Filterscheiben (7) angeordnet sind, durch welche Teilströme der zu filtrierenden Kunststoffschmelze hindurchströmen, dadurch gekennzeichnet, daß sich die Filterstange (6) aus Vollmaterial in einem zylindrischen Kanal (15) befindet, daß die Teilströme, welche durch die Filterscheiben (7) hindurchströmen, in den Kanal (15) einströmen, daß eine Filtergehäuseinnenwand (3) sich über ihre volle Länge in Fließrichtung der Kunststoffschmelze verjüngt und daß der Durchmesser d der Filterstange (6) über deren volle Länge in Fließrichtung der Kunststoffschmelze abnimmt.

2.  Filtervorrichtung nach Anspruch 1, dadurch gekennzeichnet, daß ein Innendurchmesser D des Innenraums (14) des Filtergehäuses (2) sich in Fließrichtung der Kunststoffschmelze entsprechend einer Funktion größer einer zweiten Wurzel-Funktion verjüngt.

3.  Filtervorrichtung nach Anspruch 1, dadurch gekennzeichnet, daß die Filterscheiben (7) gleichgroße Außen- und Innendurchmesser $d_{ad}$ bzw. $d_{id}$ besitzen.

4.  Filtervorrichtung nach Anspruch 1, dadurch gekennzeichnet, daß eine Spaltweite $h_a(x)$, entsprechend dem Abstand Filterscheibenaußenrand (8) zu Filtergehäuseinnenwand (3), in Abhängigkeit von der Lagekoordinate x in Fließrichtung der Kunststoffschmelze, aus der Beziehung

$$h_a(x) = h_{a\,min} + (h_{a\,max} - h_{a\,min})\,(1 - \tfrac{x}{N})^{\beta},$$

folgt, mit der minimalen Spaltweite $h_{a\,min}$, der maximalen Spaltweite $h_{a\,max}$, der Gesamtlänge N des Filterbereichs, der sämtliche Filterscheiben (7) umfaßt, und einen geometrischen Exponenten $\beta$, der größer 1/4 und kleiner 1/2 ist.

5.  Filtervorrichtung nach Anspruch 4, dadurch gekennzeichnet, daß der geometrische Exponent $\beta$ gleich 1/3 ist.

6.  Filtervorrichtung nach Anspruch 1, dadurch gekennzeichnet, daß der Durchmesser d der Filterstange (6) in Fließrichtung der Kunststoffschmelze entsprechend einer Funktion größer einer zweiten Wurzel-Funktion abnimmt.

7.  Filtervorrichtung nach Anspruch 1, dadurch gekennzeichnet, daß der Abstand Stangenaußenseite zu Filterscheibeninnenrand (9) eine Spaltweite $h_i$, in Abhängigkeit von der Lagekoordinate x in Fließrichtung der Kunststoffschmelze aus der Beziehung

$$h_i(x) = h_{i\,max}\,(\tfrac{x}{N})^{a}$$

sich ergibt, mit der maximalen Spaltweite $h_{i\,max}$, der Lagekoordinate x, der Gesamtlänge N des Filterbereichs, der sämtliche Filterscheiben (7) umfaßt und einen geometrischen Exponenten $\alpha$, der größer 1/4 und kleiner 1/2 ist.

8.  Filtervorrichtung nach Anspruch 7, dadurch gekennzeichnet, daß der geometrische Exponent $\alpha$ gleich 1/3 ist.

9.  Filtervorrichtung nach Anspruch 3, dadurch gekennzeichnet, daß die Filterscheiben (7) einen Außendurchmesser $d_{ad}$ im Bereich von 178 bis 305 mm (7 bis 12 Zoll) besitzen.

10. Filtervorrichtung nach den Ansprüchen 1 und 9, dadurch gekennzeichnet, daß der Innendurchmesser D des Innenraums (14) des Filtergehäu ses (2) in Abhängigkeit von der Lagekoordinate x in Fließrichtung sich aus der Summe des Außendurchmessers $d_{ad}$ der Filterscheibe (7) und dem doppelten Abstand $h_a(x)$ Filterscheibenaußenrand (8) zu Filtergehäuseinnenwand (3) ergibt.

**11.** Filtervorrichtung nach Anspruch 1, dadurch gekennzeichnet, daß die Filterstange (6) von radialen Stegen (10) umgeben ist, deren Längen in Fließrichtung der Kunststoffschmelze ansteigen und daß die Stege als Filterscheibenauflagen zur axialen Justierung der Filterscheiben (7) vorgesehen sind.

**12.** Filtervorrichtung nach Anspruch 1, dadurch gekennzeichnet, daß sie als Durchflußfiltervorrichtung einen außerhalb des Filtergehäuses (2) befindlichen Zufluß (4) aufweist.

**13.** Filtervorrichtung nach Anspruch 12, dadurch gekennzeichnet, daß sie liegend in einer Filterstrecke montiert ist.

**14.** Filtervorrichtung nach Anspruch 12, dadurch gekennzeichnet, daß sie senkrecht in einer Filterstrecke angeordnet ist.

**15.** Filtervorrichtung nach Anspruch 1, dadurch gekennzeichnet, daß im Filtergehäusekopf (11) eine Prallplatte (12) oberhalb der ersten Filterscheibe (7) angeordnet ist und daß die Spaltweite h(r) zwischen Filtergehäuseinnenwand (3) und Prallplatte (12) umgekehrt proportional zu der dritten Wurzel des radialen Abstandes r von der Mittellinie m der Filterstange (6) ist.

**16.** Filtervorrichtung nach Anspruch 1, dadurch gekennzeichnet, daß zwischen den zueinander parallelen Filterscheiben (7) im Bereich des Innendurchmessers $d_{id}$ der Filterscheiben (7) Dichtungen (13) angeordnet sind.

## Claims

**1.** A filter apparatus for the uniform filtering of plastic melts having a filter housing (2) in the interior (14) of which filter disks (7) which are parallel to one another are arranged along a central filter rod (6), through which filter disks flow part-streams of the plastic melt to be filtered, wherein the filter rod (6) made of solid material is situated in a cylindrical channel (15), the part-streams, which flow through the filter disks (7), flow into the channel (15), a filter housing inner wall (3) tapers over its full length in the direction of flow of the plastic melt and the diameter d of the filter rod (6) decreases over the full length thereof in the direction of flow of the plastic melt.

**2.** The filter apparatus as claimed in claim 1, wherein an internal diameter D of the interior (14) of the filter housing (2) tapers in the direction of flow of the plastic melt in accordance with a function greater than a square root function.

**3.** The filter apparatus as claimed in claim 1, wherein the filter disks (7) have outer and inner diameters $d_{ad}$ and $d_{id}$ of equal size.

**4.** The filter apparatus as claimed in claim 1, wherein a gap width $h_a(x)$, corresponding to the distance from filter disk outer rim (8) to filter housing inner wall (3), as a function of the positional coordinate x in the direction of flow of the plastic melt, is given by the relationship

$$h_a(x)=h_{a\,min}+(h_{a\,max}-h_{a\,min})\,(1-\tfrac{x}{N})^{\beta},$$

where $h_{a\,min}$ is the minimum gap width, $h_{a\,max}$ is the maximum gap width, N is the total length of the filter region which includes all of the filter disks (7), and $\beta$ is a geometric exponent which is greater than 1/4 and less than 1/2.

**5.** The filter apparatus as claimed in claim 4, wherein the geometric exponent $\beta$ is equal to 1/3.

**6.** The filter apparatus as claimed in claim 1, wherein the diameter d of the filter rod (6) decreases in the direction of flow of the plastic melt in accordance with a function greater than a square root function.

**7.** The filter apparatus as claimed in claim 1, wherein the distance from rod exterior to filter disk inner rim (9), a gap width $h_i$, as a function of the positional coordinate x in the direction of flow of the plastic melt is given by the relationship

$$h_i(x)=h_{i\,max}(\tfrac{x}{N})^{a},$$

where $h_{i\,max}$ is the maximum gap width, x is the positional coordinate, N is the total length of the filter region which includes all of the filter disks (7), and $\alpha$ is a geometric exponent which is greater than 1/4 and less than 1/2.

**8.** The filter apparatus as claimed in claim 7, wherein the geometric exponent $\alpha$ is equal to 1/3.

**9.** The filter apparatus as claimed in claim 3, wherein the filter disks (7) have an outer diameter $d_{ad}$ in the range from 178 to 305 mm (7 to 12 inches).

**10.** The filter apparatus as claimed in claims 1 and 9, wherein the inner diameter D of the interior (14) of the filter housing (2) as a function of the positional coordinate x in the direction of flow is given by the sum of the outer diameter $d_{ad}$ of the filter disk (7) and twice the distance $h_a(x)$ from the filter disk outer rim (8) to the filter housing inner wall (3).

**11.** The filter apparatus as claimed in claim 1, wherein the filter rod (6) is surrounded by radial ridges (10) whose lengths increase in the direction of flow of the plastic melt, and the ridges are provided as filter disk supports for axial adjustment of the filter disks (7).

**12.** The filter apparatus as claimed in claim 1, wherein it, as a continuous-flow filter apparatus, has an intake (4) situated outside the filter housing (2).

**13.** The filter apparatus as claimed in claim 12, wherein it is mounted horizontally in a filter section.

**14.** The filter apparatus as claimed in claim 12, wherein it is arranged vertically in a filter section.

**15.** The filter apparatus as claimed in claim 1, wherein a baffle plate (12) is arranged above the first filter disk (7) in the filter housing head (11) and the gap width h(r) between filter housing inner wall (3) and baffle plate (12) is inversely proportional to the cube root of the radial distance r from the center line m of the filter rod (6).

**16.** The filter apparatus as claimed in claim 1, wherein seals (13) are arranged between the filter disks (7) which are parallel to one another, in the region of the inner diameter $d_{id}$ of the filter disks (7).

**Revendications**

**1.** Dispositif de filtre pour réaliser la filtration uniforme de masses fondues de matière plastique, comportant un boîtier de filtre (2), dans l'espace intérieur (14) duquel sont disposés, le long d'une tige centrale (6) du filtre, des disques filtrants parallèles (7), que traversent des courants partiels de la masse fondue de matière plastique à filtrer, caractérisé en ce que la tige (6) du filtre réalisée en un matériau massif est disposée dans un canal cylindrique (15), que les courants partiels, qui traversent les disques filtrants (7), pénètrent dans le canal (15), qu'une paroi intérieure (3) du boîtier du filtre se rétrécit sur toute sa longueur dans la direction de circulation de la masse fondue de matière plastique et que le diamètre d de la tige (6) du filtre diminue sur toute sa longueur dans la direction d'écoulement de la masse fondue de matière plastique.

**2.** Dispositif de filtre selon la revendication 1, caractérisé en ce qu'un diamètre intérieur D de l'espace intérieur (14) du boîtier de filtre (2) se rétrécit dans la direction d'écoulement de la masse fondue de matière plastique, conformément à une fonction supérieure à une fonction racine carrée.

**3.** Dispositif de filtre selon la revendication 1, caractérisé en ce que les disques filtrants (7) possèdent des diamètres extérieurs $d_{ad}$ identiques ou des diamètres intérieurs $d_{id}$ identiques.

**4.** Dispositif de filtre selon la revendication 1, caractérisé en ce qu'une largeur de fente $h_a(x)$, qui correspond à la distance entre le bord extérieur (8) des disques filtrants et la paroi intérieure (3) du boîtier de filtre, s'exprime en fonction de la coordonnée de position x dans la direction d'écoulement de la masse fondue de matière plastique, par la relation

$$h_a(x) = h_{a\,min} + (h_{a\,max} - h_{a\,min})\,(1 - \frac{x}{N})^{\beta},$$

$h_{a\,min}$ désignant la largeur minimale de fente, $h_{a\,max}$ désignant la largeur maximale de fente, N désignant la longueur totale de la zone de filtration, qui comprend tous les disques filtrants (7), et β un exposant géométrique, qui est supérieur à 1/4 et inférieur à 1/2.

**5.** Dispositif de filtre selon la revendication 4, caractérisé en ce que l'exposant géométrique β est égal à 1/3.

**6.** Dispositif de filtre selon la revendication 1, caractérisé en ce que le diamètre d de la tige (6) du filtre diminue dans la direction d'écoulement de la masse fondue de matière plastique conformément à une fonction qui est supérieure à une fonction racine carrée.

**7.** Dispositif de filtre selon la revendication 1, caractérisé en ce que la distance entre le côté extérieur de la tige et le bord intérieur (9) des disques filtrants fournit une largeur de fente $h_i$, en fonction de la coordonnée de position x dans la direction d'écoulement de la masse fondue de matière plastique, conformément à la relation

$$h_i(x) = h_{1\,max}\,(\frac{x}{N})^{\alpha}$$

$h_{i\,max}$ désignant la largeur de fente maximale, x la coordonnée de position, N la longueur totale de la zone filtrante, qui comprend l'ensemble des disques filtrants (7), et α un exposant géométrique, qui est supérieur à 1/4 et inférieur à 1/2.

**8.** Dispositif de filtre selon la revendication 7, caractérisé en ce que le composant géométrique $\alpha$ est égal à 1/3.

**9.** Dispositif de filtre selon la revendication 3, caractérisé en ce que les disques de filtre (7) possèdent un diamètre extérieur $d_{ad}$ dans la gamme comprise entre 178 et 305 mm (7 à 12 pouces).

**10.** Dispositif de filtre selon les revendications 1 et 9, caractérisé en ce que le diamètre intérieur D de l'espace intérieur (14) du boîtier de filtre (2) en fonction de la coordonnée de position x dans la direction d'écoulement est égal à la somme du diamètre extérieur $d_{ad}$ des disques filtrants (7) et au double de la distance $h_a(x)$ entre le bord extérieur (8) des disques filtrants et la paroi intérieure (3) du boîtier de filtre.

**11.** Dispositif de filtre selon la revendication 1, caractérisé en ce que la tige (6) du filtre est entourée par des barrettes radiales (10), dont les longueurs augmentent dans la direction de circulation de la masse fondue de matière plastique et que les barrettes sont prévues en tant qu'appuis pour les disques filtrants, pour permettre l'ajustement axial des disques filtrants (7).

**12.** Dispositif de filtre selon la revendication 1, caractérisé en ce qu'il comporte, en tant que dispositif de filtre à traverser, une arrivée (4) disposée à l'extérieur du boîtier de filtre (2).

**13.** Dispositif de filtre selon la revendication 12, caractérisé en ce qu'il est monté en position horizontale dans une section de filtration.

**14.** Dispositif de filtre selon la revendication 12, caractérisé en ce qu'il est disposé verticalement dans une section de filtration.

**15.** Dispositif de filtre selon la revendication 1, caractérisé en ce qu'une plaque d'impact (12) est disposée au-dessus du premier disque filtrant (7) dans la tête (11) du boîtier de filtre et que la largeur de fente h (r) entre la paroi intérieure (3) du boîtier de filtre et la plaque d'impact (12) est inversement proportionnelle à la racine cubique de la distance radiale r par rapport à l'axe médian m de la tige (6) du filtre.

**16.** Dispositif de filtre selon la revendication 1, caractérisé en ce que des garnitures d'étanchéité (13) entre les disques filtrants en parallèle (7) sont disposées dans la zone correspondant au diamètre intérieur $d_{id}$ des disques filtrants (7).

FIG.1

FIG. 2

# FIG. 3

FIG.4

FIG.5

VERWEILZEITSPEKTRUM

FIG. 6

50 Kg/h

150 Kg/h

220 Kg/h

EP 0 806 281 B1

FIG.7